# EUROPEAN PATENT SPECIFICATION

(11) **EP 3 416 084 B1**
(45) Date of publication and mention of the grant of the patent: **27.01.2021**
(21) Application number: 17176279.2
(22) Date of filing: 15.06.2017
(51) Int. Cl.: G06F 21/53, G06F 21/55, H04L 29/06

(54) **COMMUNICATION APPARATUS, METHOD AND SOFTWARE**
KOMMUNIKATIONSVORRICHTUNG, METHODE UND SOFTWARE
APPAREIL DE COMMUNICATION, PROCÉDÉ ET LOGICIEL

(43) Date of publication of application: 19.12.2018
(73) Proprietor: Nokia Solutions and Networks Oy, 02610 Espoo (FI)
(72) Inventor: HOLTMANNS, Silke, 02610 Espoo (FI); OLIVER, Ian Justin, 02610 Espoo (FI); MICHE, Yoan Jean Claude, 02610 Espoo (FI); KALLIOLA, Aapo, 02610 Espoo (FI)
(74) Representative: Style, Kelda Camilla Karen

(56) References cited:
- EP-A1- 2 955 894
- US-A1- 2008 141 374

## Description

### Field

This disclosure relates to communications, and more particularly to communications involving a network node receiving one or more data packets from an interconnection network.

### Background

A communication system can be seen as a facility that enables communication between two or more devices such as user terminals, machine-like terminals, base stations and/or other nodes by providing communication channels for carrying information between the communicating devices. A communication system can be provided for example by means of a communication network and one or more compatible communication devices. The communication may comprise, for example, communication of data for carrying data for voice, electronic mail (email), text message, multimedia and/or content data communications and so on. Non-limiting examples of services provided include two-way or multi-way calls, data communication or multimedia services and access to a data network system, such as the Internet.

In a wireless system at least a part of communications occurs over wireless interfaces. Examples of wireless systems include public land mobile networks (PLMN), satellite based communication systems and different wireless local networks, for example wireless local area networks (WLAN). A local area wireless networking technology allowing devices to connect to a data network is known by the tradename WiFi (or Wi-Fi). WiFi is often used synonymously with WLAN. The wireless systems can be divided into cells, and are therefore often referred to as cellular systems. A base station provides at least one cell.

A user can access a communication system by means of an appropriate communication device or terminal capable of communicating with a base station. Hence nodes, like base stations, are often referred to as access points. A communication device of a user is often referred to as user equipment (UE). A communication device is provided with an appropriate signal receiving and transmitting apparatus for enabling communications, for example enabling communications with the base station and/or communications directly with other user devices. The communication device can communicate on appropriate channels, e.g. listen to a channel on which a station, for example a base station of a cell, transmits.

A communication system and associated devices typically operate in accordance with a given standard or specification which sets out what the various entities associated with the system are permitted to do and how that should be achieved. Communication protocols and/or parameters which shall be used for the connection are also typically defined. Non-limiting examples of standardised radio access technologies include GSM (Global System for Mobile), EDGE (Enhanced Data for GSM Evolution) Radio Access Networks (GERAN), Universal Terrestrial Radio Access Networks (UTRAN) and evolved UTRAN (E-UTRAN). An example communication system architecture is the long-term evolution (LTE) of the Universal Mobile Telecommunications System (UMTS) radio-access technology. The LTE is standardised by the third Generation Partnership Project (3GPP). The LTE employs the Evolved Universal Terrestrial Radio Access Network (E-UTRAN) access and a further development thereof which is sometimes referred to as LTE Advanced (LTE-A).

Some communication systems may send and receive data using means other than radio communications. For example, a landline telephone uses a metal wire or fibre optic cable for transmission instead of radio waves. A landline telephone may send and receive data over a public switched telephone network (PSTN).

The core networks have typically become more and more open. For example, the 5G Internet of Things (IoT) architecture introduces new interfaces for service providers and introduces an interconnection network that has more nodes which are accessible via the internet. The signalling protocols which are used for 5G IoT or for other protocols are often made in an extendible manner to allow backward compatibility, whilst giving vendors the opportunity to add their own features and updates via proprietary extensions. Proprietary extensions or new protocol extensions are transmitted in signalling messages to the core network by network operators. When a signalling message is received at a core network, the system may need to determine whether the message contains a legitimate proprietary extension or new protocol extensions or whether the message instead contains malware, e.g. ransomware.

Many important telecommunication operators see ransomware as a risk for their networks. The 2017 Cyberthreat defense report from the CyberEdge Group found that ransomware has expanded from an annoying consumer-centric affliction to a risk now affecting all businesses and a concern to top management, and that 61% of companies were affected by ransomware in 2016. The report also found that vertical industries were hit the hardest, with 71.2% of telecommunication technology companies being affected.

For certain industries, such as telecommunications operators or health care providers, preventing disruption is a requirement as they provide a critical infrastructure for the citizens. This is particularly important for the upcoming Internet of things and connected vehicles, which use cellular communication for their connections.

US Patent Application Publication number 2008/141374 describes how traffic from a communication network is received by an anomaly detection component. The anomaly detection component monitors the received traffic and routes the traffic either to the protected application or to a honeypot. The honeypot shares all state information with the application. If the received traffic is routed to the honeypot, the honeypot monitors the traffic for an attack. If an attack occurs, the honeypot repairs the protected application (e.g., discarding any state changes incurred from the attack, reverting to previously saved state information, etc.).

### Statement of Invention

According to a first aspect, there is provided a method according to claim 1.

In one embodiment, the node comprises a firewall , wherein the firewall is configured to perform the steps of: receiving at the node; searching in the data store; if a rule is identified in the data store for the one or more data packets, applying that rule to the one or more data packets; if no rule is identified in the data store for at least part of the one or more data packets, transmitting, the at least part of one or more data packets to the test system; and updating the rules.

In one embodiment, the method comprises running the software in the virtualised environment using an accelerated clock.

In one embodiment, the software comprises one or more attribute-value pairs.

In one embodiment, the node is an edge node configured to connect a network core to the interconnection network.

In one embodiment, the virtualised environment comprises a sandbox.

In one embodiment, the one or more virtualised nodes of the communication system comprise one or more of: a home subscriber server; a mobility management entity; home location register; a mobile switch center; a visitor location register; a Serving General Packet Radio Service Support node; a Gateway General Packet Radio Service Support node; and a packet data network gateway.

In one embodiment, the at least part of one or more data packets comprises an extension to a communications protocol.

In one embodiment, the extension to the communications protocol is backwards compatible.

In one embodiment, transmitting information for controlling the firewall comprises transmitting the information to the firewall.

In one embodiment, the information comprises test results.

In one embodiment, the information comprises an indication of the threat level.

In one embodiment, the one or more data packets are configured according to the diameter protocol.

In one embodiment, the one or more data packets are configured according to the general packet radio service tunneling protocol.

In one embodiment, the node of the communication system is configured to communicate using a SS7 protocol.

In one embodiment, the at least part of said one or more data packets comprises elements unrecognised to the node.

In one embodiment, controlling the node comprises updating one or more rules of the node.

In one embodiment, wherein the node is configured to determine that the at least part of said one or more data packets are unrecognised to the node upon no rule of the sets of rules being identified for the software.

In one embodiment, the node is configured to: extract the at least part of said one or more data packets from the one or more data packets; and perform an action with respect to a remaining part of the one or more data packets in response to determining a match of said remaining part to at least one rule of said set of rules.

In one embodiment, each of the set of rules is associated with an action.

In one embodiment, each action comprises at least one of: allowing the transmission of at least one data packet through the firewall upon said at least one data packet matching an associated rule; and blocking the transmission of at least one data packet through the firewall upon said at least one data packet matching an associated rule.

In one embodiment, the node comprises a firewall.

In one embodiment, the at least part of one or more data packets comprise software, wherein the test system is configured to run the software in the virtualised environment.

In one embodiment, running the software in the virtualised environment comprises running the software in the virtualised environment using an accelerated clock.

In one embodiment, the software comprises one or more attribute-value pairs.

In one embodiment, the node is an edge node configured to connect a network core to the interconnection network.

In one embodiment, the virtualised environment comprises a sandbox.

In one embodiment, the one or more virtualised nodes of the communication system comprise one or more of: a home subscriber server; a mobility management entity; home location register; a mobile switch center; a visitor location register; a Serving General Packet Radio Service Support node; a Gateway General Packet Radio Service Support node; and a packet data network gateway.

In one embodiment, the at least part of one or more data packets comprises an extension to a communications protocol.

In one embodiment, the extension to the communications protocol is backwards compatible.

In one embodiment, transmitting information for controlling the firewall comprises transmitting the information to the firewall.

In one embodiment, the information comprises test results.

In one embodiment, the information comprises an indication of the threat level.

In one embodiment, the one or more data packets are configured according to the diameter protocol.

In one embodiment, the one or more data packets are configured according to the general packet radio service tunneling protocol.

In one embodiment, the node of the communication system is configured to communicate using a SS7 protocol.

In one embodiment, the at least part of said one or more data packets comprises elements unrecognised to the node.

In one embodiment, controlling the node comprises updating one or more rules of the node.

In one embodiment, the method further comprises: determining that the at least part of said one or more data packets are unrecognised to the node upon no rule of the sets of rules being identified for the software.

In one embodiment, the method further comprises: extracting the at least part of said one or more data packets from the one or more data packets; and performing an action with respect to a remaining part of the one or more data packets in response to determining a match of said remaining part to at least one rule of said set of rules.

In one embodiment, each of the set of rules is associated with an action.

In one embodiment, each action comprises at least one of: allowing the transmission of at least one data packet through the firewall upon said at least one data packet matching an associated rule; and blocking the transmission of at least one data packet through the firewall upon said at least one data packet matching an associated rule.

According to a second aspect, there is provided a computer program product for a computer comprising software code portions for performing the steps of the first aspect when the program is run on the computer.

According to a third aspect, there is provided an apparatus according to claim 10.

According to a fourth aspect, there is provided an apparatus comprising: means for receiving from a node of a communication system, at least part of one or more data packets received at the node from an interconnection network; means for providing the at least part of one or more data packets to a virtualised environment comprising one or more virtualised nodes of a communication system to determine a threat level associated with the at least part of one or more data packets; and means for, based on the determined threat level, transmitting information for controlling the node.

### Brief description of Figures

Some embodiments will now be described in further detail, by way of example only, with reference to the following examples and accompanying drawings, in which:
Figure 1 shows a schematic example of a wireless communication system where some embodiments may be implemented;
Figure 2 shows an example of a communication device;
Figure 3 shows an example of a control apparatus;
Figure 4 show an example of a communication system;
Figure 5 shows an example of a communication system and test system;
Figure 6 show a flow chart of a method that may be performed in a node according to an example; and
Figure 7 shows a flow chart of a method that may be performed in a test system according to an example.

### Detailed Description

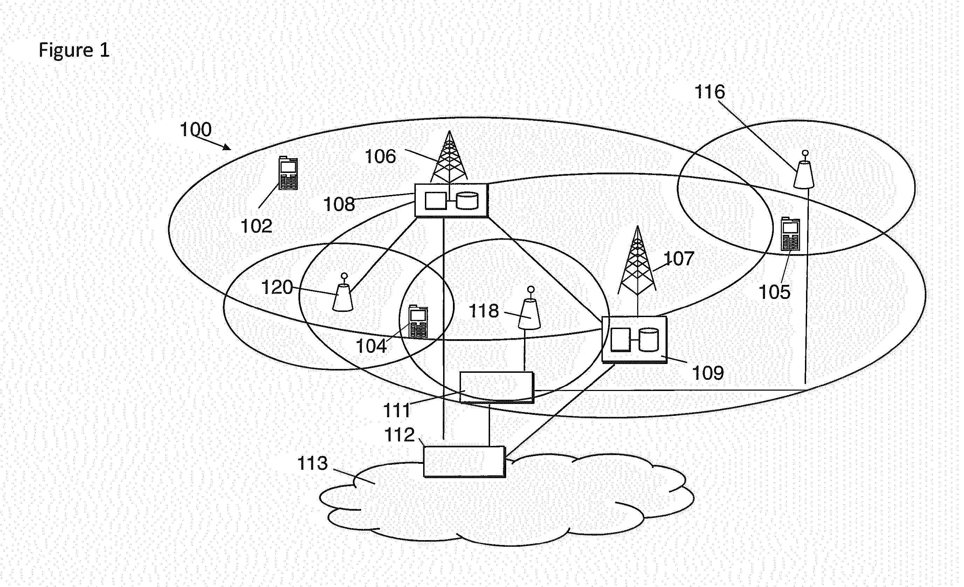

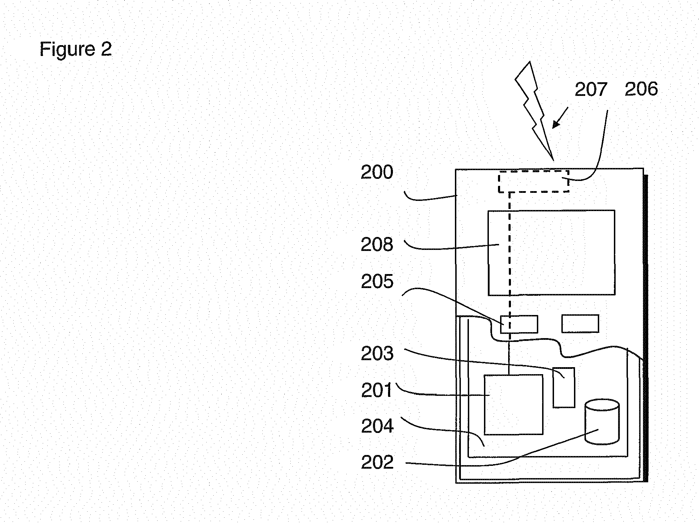

Before explaining in detail the examples, certain general principles of a wireless communication system and mobile communication devices are briefly explained with reference to Figures 1 to 2 to assist in understanding the technology underlying the described examples. It would be appreciated that although the examples described with respect to figures 1 and 2 relate to wireless communication systems, some embodiments may relate to communication systems which use wires (e.g. metal wires or fibre optic cables) for communication between user devices and nodes of the communication system.

In a wireless communication system 100, such as that shown in Figure 1, wireless communication devices, for example, user equipment (UE) or MTC devices 102, 104, 105 are provided wireless access via at least one base station or similar wireless transmitting and/or receiving wireless infrastructure access node or point. Such an access node can be, for example, a base station or an eNodeB (eNB), or in a 5G system a Next Generation NodeB (gNB), or other wireless infrastructure node. These nodes will be generally referred to as base stations. Base stations are typically controlled by at least one appropriate controller apparatus, so as to enable operation thereof and management of mobile communication devices in communication with the base stations. The controller apparatus may be located in a radio access network (e.g. wireless communication system 100) or in a core network (CN) (not shown) and may be implemented as one central apparatus or its functionality may be distributed over several apparatus. The controller apparatus may be part of the base station and/or provided by a separate entity such as a Radio Network Controller. In Figure 1, control apparatus 108 and 109 are shown to control the respective macro level base stations 106 and 107. In some systems, the control apparatus may additionally or alternatively be provided in a radio network controller. Other examples of radio access system comprise those provided by base stations of systems that are based on technologies such as 5G or new radio, wireless local area network (WLAN) and/or WiMax (Worldwide Interoperability for Microwave Access). A base station can provide coverage for an entire cell or similar radio service area.

In Figure 1 base stations 106 and 107 are shown as connected to a wider communications network 113 via gateway 112. A further gateway function may be provided to connect to another network.

The smaller base stations 116, 118 and 120 may also be connected to the network 113, for example by a separate gateway function and/or via the controllers of the macro level stations. The base stations 116, 118 and 120 may be pico or femto level base stations or the like. In the example, stations 116 and 118 are connected via a gateway 111 whilst station 120 connects via the controller apparatus 108. In some embodiments, the smaller stations may not be provided.

A possible wireless communication device will now be described in more detail with reference to Figure 2 showing a schematic, partially sectioned view of a communication device 200. Such a communication device is often referred to as user equipment (UE) or terminal. An appropriate mobile communication device may be provided by any device capable of sending and receiving radio signals. Non-limiting examples comprise a mobile station (MS) or mobile device such as a mobile phone or what is known as a 'smart phone', a computer provided with a wireless interface card or other wireless interface facility (e.g., USB dongle), personal data assistant (PDA) or a tablet provided with wireless communication capabilities, or any combinations of these or the like. A mobile communication device may provide, for example, communication of data for carrying communications such as voice, electronic mail (email), text message, multimedia and so on. Users may thus be offered and provided numerous services via their communication devices. Non-limiting examples of these services comprise two-way or multi-way calls, data communication or multimedia services or simply an access to a data communications network system, such as the Internet. Users may also be provided broadcast or multicast data. Non-limiting examples of the content comprise downloads, television and radio programs, videos, advertisements, various alerts and other information.

A wireless communication device may be for example a mobile device, that is, a device not fixed to a particular location, or it may be a stationary device. The wireless device may need human interaction for communication, or may not need human interaction for communication, for example being a MTC device. In the present teachings the terms UE is used but it should be appreciated that embodiments may be used with any type of wireless communication device.

The wireless device 200 may receive signals over an air or radio interface 207 via appropriate apparatus for receiving and may transmit signals via appropriate apparatus for transmitting radio signals. In Figure 2 transceiver apparatus is designated schematically by block 206. The transceiver apparatus 206 may be provided for example by means of a radio part and associated antenna arrangement. The antenna arrangement may be arranged internally or externally to the wireless device.

A wireless device is typically provided with at least one data processing entity 201, at least one memory 202 and other possible components 203 for use in software and hardware aided execution of tasks it is designed to perform, including control of access to and communications with access systems and other communication devices. The data processing, storage and other relevant control apparatus can be provided on an appropriate circuit board and/or in chipsets. This feature is denoted by reference 204. The user may control the operation of the wireless device by means of a suitable user interface such as key pad 205, voice commands, touch sensitive screen or pad, combinations thereof or the like. A display 208, a speaker and a microphone can be also provided. Furthermore, a wireless communication device may comprise appropriate connectors (either wired or wireless) to other devices and/or for connecting external accessories, for example hands-free equipment, thereto. The communication devices 102, 104, 105 may access the communication system based on various access techniques.

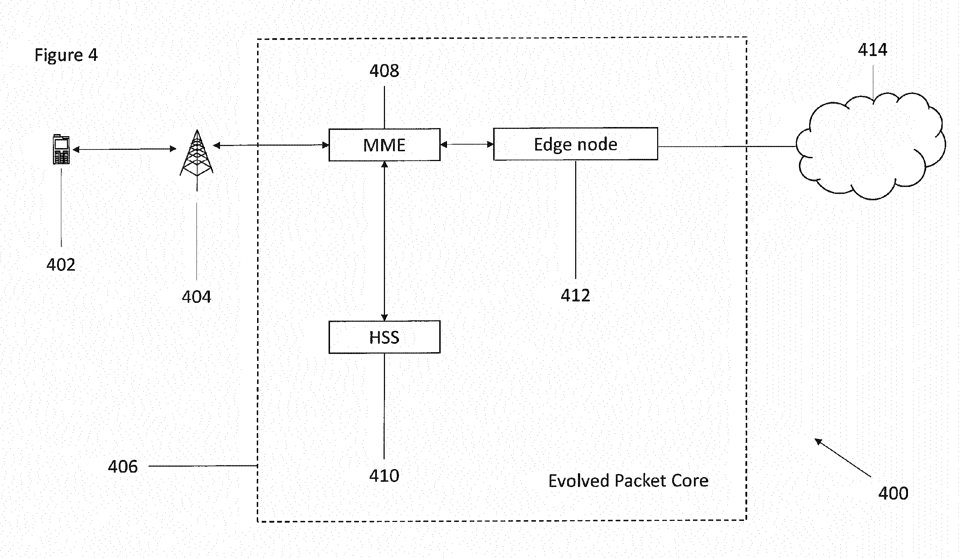

Reference is made to Figure 4, which shows an example of a communication system 400 including some of the core network nodes, a UE, and base station. The core network nodes shown in this example may belong to the system architecture evolution, which is the core network architecture of 3GPP'S LTE wireless communication standard. However, it would be understood that other communication standards could apply. A UE 402 in communication with a base station 404 is shown. The UE 402 may be a UE 102, 104, 105, 200 as described above with respect to Figures 1 and 2. The base station 404 could be any of base stations 106, 107, 116, 118, 120 as described above with respect to Figure 1.

Figure 4 further shows a series of core network nodes forming part of an evolved packet core 406, which is in communication with the base station 404. The evolved packet core 406 includes a mobility management entity (MME) 408 in communication with base station 404. The MME is the key control-node for the LTE access-network. The MME manages session states and authenticates and tracks a user across the network. It is responsible for the idle mode UE paging and tagging procedure including retransmissions. It is involved in the bearer activation/deactivation process and is also responsible for choosing the serving gateway for a UE at the initial attach and at time of intra-LTE handover involving Core Network (CN) node relocation. It is responsible for authenticating the user by interacting with the home subscriber server (HSS) 410. The HSS 410, which is also part of the evolved packet core, is a central database that contains user-related and subscription-related information. The functions of the HSS include functionalities such as mobility management, call and session establishment support, user authentication and access authorisation. Also shown in the evolved packet core is an edge node 412, which may be a diameter edge agent (DEA). The edge node provides an entry point that hides the topology of the network behind it and advertises itself to roaming partners as a diameter relay serving all diameter applications in the network. A diameter application communicates over the interconnection network 414, e.g. an Internetwork packet exchange network, using the diameter protocol, which is an authentication, authorisation, and accounting protocol for computer networks. The edge node 412 may receive communications from over the interconnection network 414 and forward these communications to other nodes in the communication system. The edge node 412 may additionally receive communications from other nodes in the communication system and forward these packets over the interconnection network 414.

The diameter protocol and MAP both define message format, which comprises a header and a set of data elements expressed as attribute value pairs (AVPs). By expressing data as AVPs, applications using the protocol can be extended in the future without having to modify existing code or data inputs. The backwards compatibility of AVPs allows a Diameter protocol enabled network node to communicate over an interconnection network with a SS7/MAP node to provide basic services. The freely specified fields which have arbitrary length and may contain arbitrary data, which enable this backwards compatibility, may unfortunately be good candidates for malware delivery. One problem that may be encountered is that the communication system which receives the data may not be able to distinguish between genuine extensions from operators, which should be allowed through an edge node and data including malware, which should be blocked from the system. This problem may also occur when communicating using protocols other than the diameter protocol or MAP.

The interconnection network 414 is a private signalling network through which operator networks may communicate with each other. This enables the roaming of electronic devices, since different operators may communicate with each other over the interconnection network, an electronic device may switch from communicating with one operator to communicating with another operator or to enable devices using different network operators to communicate with one another. The communications over the interconnection network may be according to the diameter protocol or according to the Message Application Part (MAP) protocol. The interconnection network may connect core networks that communicate with UEs using entirely different protocols. For example, the interconnection network may connect a core network configured to communicate with UEs over metal wires using a PSTN with a core network configured to communicate with UEs according using radio waves according to LTE. The main obstacle for an attacker is to gain access to the private Interconnection network. But the legal rules for network operators for renting out access to the interconnection to service providers differ between countries, also some nodes are attached and visible on the internet (e.g. via shodan.io). Therefore attacker with sufficient technical skills orfinancial resources have found ways to breach the privacy of the network.

An attacker may transmit data packets to the communication system 400 over the network 414, and the packets may be received at the edge node 412. The data packets may include malware, which could be disguised as an extension to a communication protocol. There is a need, therefore, to distinguish malware sent by an attacker from genuine extensions to communication protocols which may be received from operators.

To address this problem, one proposal has been to insert a firewall in the edge node 412, which blocks traffic of a type that it is not familiar with. However, this may lead to losing feature support on the interconnection or inside the core network, since some genuine software from operators will be blocked by the firewall.

Another issue with this approach is that the network nodes of another core network, which the communication system may be configured to communicate with over network 414 may have been upgraded whilst the core network of the communication system 400 has not. This could be because the other core network is associated with a different network operator. Therefore, the other core network may support certain features which the communication system 400 does not, and may send communications utilising those features, e.g. using a particular message format or a particular extension to a communication protocol, which the communication system 400 does not support. Since the firewall of the edge node that receives these communications does not recognise them - because the communication system does not support those features - it will simply discard communications including those features as being suspicious. This is often unnecessary since, frequently the communication protocols are backwards compatible. This is the case with the diameter protocol which makes use of attribute value pairs (AVP). Therefore, the communication system may be capable of receiving and processing messages according to a latest protocol/format even if it has not been updated to send messages using this protocol/format itself. It is, therefore undesirable for a firewall of the system to block messages since they are sent according to a newer version of the communication protocol when they include no malicious content.

Another proposal is to route the suspicious traffic to the virtual test environment and, after observing that no harm has been done, to route the traffic back to the normal real network nodes. This approach causes a message delay and also for the case of a Denial of Service (DoS) is not very efficient. In a DoS attack, each message could be checked to determine whether it is harmless. However, carrying out his method for a large number of messages with cause network problem due to the inefficiency.

One proposal that could be applied to address viruses and worms that originate from a UE is to create a quarantine network for determining whether each data object transmitted to the quarantine network from the UE poses a threat of including malicious material. The quarantine network may make this determination by obtaining information from the UE that may be relevant to the types of malicious objects that are capable of infecting the UE and scanning the UE for predetermined malicious objects based upon the obtained information. However, although this method may be useful when accessing potential threats originating from an UE from which the quarantine network is able to obtain information, it may be desirable to access potential threats in a wide variety of situations, such as when an attack is being made from one network to another network (via an interconnection).

Some embodiments may address one or more of these issues by providing a testing system for unrecognized data packets received at a node of a communications system. The node is configured to receive one or more data packets, and to forward at least part of the one or more data packets to a test system. The one or more data packets may comprise software. The at least part of the one or more data packets may also comprise the software. The test system may be a malware test system. The test system may be configured to provide the at least part of one or more data packets to a virtualised environment, e.g. a sandbox, including one or more virtualised communication nodes, e.g. mobility management entity (MME) and/or a home subscriber server (HSS). The providing of at least part of one or more data packets may include running the software of the at least part of one or more data packets in the virtualised environment. The test system may analyse the behavior of the at least part of the one or more data packets in the virutalised environment and determine one or more parameters (e.g. memory consumption), which it may use to determine a threat level. The test system may then communicate information back to the node for controlling the node. This information may allow the node to perform an update. The update may comprise the node updating one or more of its set of rules held in a data store of the node. The set of rules are used to perform filtering of received data packets. In one embodiment, the information may comprise test results or an indication of a threat level presented by software, which the node analyses and uses to determine an update, e.g. to allow or disallow the software or similar software through the node. In another embodiment, the information may comprise control information which the test system determines itself from the test results and communicates this control information to the node which will perform an action in accordance with this control information.

The node may comprise a firewall. It would be understood by the skilled person that where the description refers to an action, e.g. updating one or more its set of rules, being performed by the node, these actions may be performed by the firewall of the node.

The information may enable the node to update one or more of its set of rules, the one or more of its sets of rule being associated with the at least part of the one or more data packets. Therefore, when a further one or more data packets associated with the updated one or more rules is received, the node will determine a match for the one or more data packets against the updated one or more rules. In response to the match, the node may then perform one or more of the actions associated with the one or more updated rules. The one or more actions may comprise blocking the data packets or allowing the data packets to be transmitted through the node.

The received at least part of the one or more data packets may be exploded in the sandbox which consists of the virtualised target nodes. This sandbox could contain virtualised nodes that are a realistic looking clone of the real nodes. The sandbox may be a cloud that contains virtualised core network nodes and realistic copies of data from network nodes, such as HSS and MME or SGSN. The core network nodes that are to be virtualised for the detonation sandbox may be instantiated prior to the at least one or more data packets being introduced to the virtualised environment. In addition monitoring and analytics software may analyse the behaviour when software from the at least part of one or more data packets is run on the virtualised nodes. The behaviour is observed closely, e.g. by determining memory consumption, side effects etc and by performing further testing. Additionally or alternatively, the sending of follow up messages, clock acceleration, etc can potentially take place. The virtualised environment may simulate the arrival and processing of one or more data packets at a virtualised core network. Fake Replica responses to this simulation are created. In addition other network activities may take place in the virtualised environment, e.g. other data and messages may be inserted to simulate the behaviour of a real network core. The signalling guard product analytics may also be part of a monitoring service. After analysing the suspicious fields and deducing their threat level, the resulting information may be fed back into the node to create automatic rules and improve the efficiency and robustness of the node.

In some embodiments, the software may comprise data, and running the software in the virtualised environment may comprise executing instructions to perform operations using the data. Additionally or alternatively, the software may comprising executable instructions, and running the software in the virtualised environment may comprise executing the executable instructions.

Upon receiving one or more data packets, at least part of which is unrecognised by the node, the at least part of the one or more data packets may be quarantined before the information for controlling the node is received from the test system. Using the information generated by the analysis performed in the virtualised environment, a threat rating may be generated. If the threat rating is above a threshold, this may be communicated to the node by the test system. In response the node may block the quarantined at least part of the data packets, i.e. prevent them from being transmitted past the node to further nodes in the communication system and/or may block further data packets from being transmitted past the node. If the threat rating is below a threshold (i.e. the at least part of the data packets are determined not to be a threat) an indication of this may be communicated to the node. The node may receive this indication and allow the quarantined at least part of the data packets to be transmitted past the node. The node may also create a rule that data packets matching a characteristic, e.g. protocol type or message format, of the quarantined at least part are to be allowed past the node in the future. For example, if the received data packets include a new extension to a communication protocol this will allow nodes of the communication system, e.g. HSS or MME or SGSN or IMS related nodes, to receive data packets according to the new extension.

By performing the testing of messages in a virtualised environment and using the results to control a node of the communication system, embodiments may allow the node to prevent threats in incoming messages from reaching the system without unnecessarily blocking incoming messages which present no threat simply because they are unknown by the node.

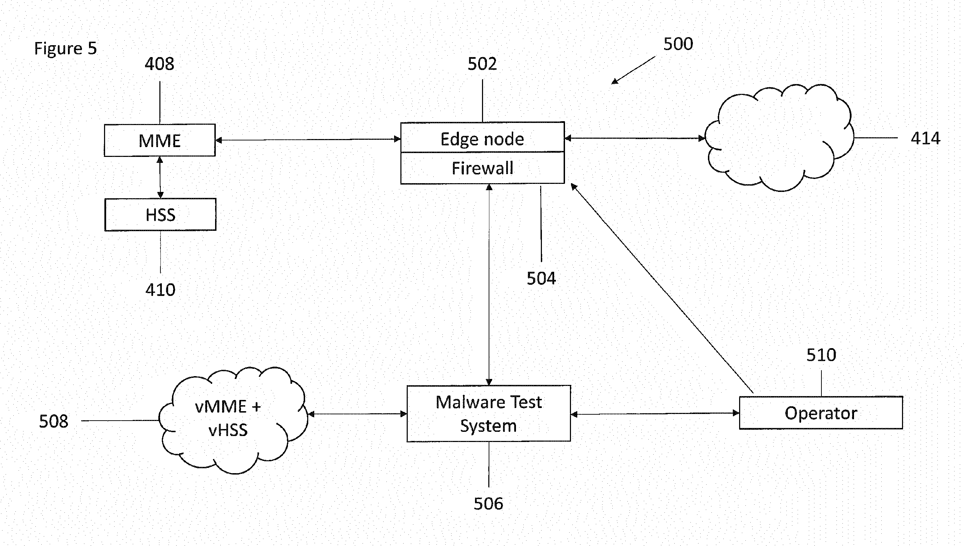

Reference is made to Figure 5, which shows an example communication system according to embodiments. The communication system may include a MME 408, and a 410 HSS, which may be the same as the MME and HSS shown in Figure 4. The communication system includes an edge node 502, which may incorporate a firewall 504. The edge node may be a DEA, and the communications sent and received by the firewall 504 and test system 506 may be according to the diameter protocol. In some embodiments, the firewall 504 may be located separate from the edge node 502.. In some embodiments, the firewall 504 may be located on another node, e.g. the MME or HSS, of the system. The firewall 504 may be implemented as an extension of a node of the communication system. It would be appreciated by the skilled person that the steps described in this example as being carried out by firewall 504 need not in be carried out by a firewall in all embodiments. In some embodiments, these steps may be carried out by a node of the communication system.

As well as the diameter protocol, some embodiments may involve communications over an interconnection network using other protocols, such as protocols that are used in an inter Signaling System No 7 (SS7), i.e. the Message Application Part (MAP) protocol. In this case, the MME 408 may be replaced with a Mobile Switching Center (MSC) and the HSS 410 may be replaced by a Home Location Register (HLR). The edge node 502 may be a Signalling Transfer Point (STP) instead of a DEA.

One or more data packets are received at the firewall 504. These may be received from over an interconnection network, e.g. an internetwork packet exchange network. The firewall may maintain a list of rules or rules which it applies to the received data packets. The firewall may scan incoming data packets for compliance with the rules so as to prevent malware from being installed in the communication system. If the firewall determines that a series of one or more incoming data packets is not in compliance with the rules of the firewall, the firewall may be configured to prevent the data packets from being transmitted to further communication nodes of the system, e.g. by dropping the data packets. If the firewall determines that a series of one or more incoming data packets is in compliance with the rules of the firewall, the firewall may be configured to allow the data packets to be transmitted to further communication nodes of the system. For example, the firewall may be configured to forward a series of data packet containing an allowed update to a communication protocol to the MME, which may then be installed in the MME and other communication nodes of the system.

The firewall may receive one or more data packets of a format or protocol that is unrecognised, i.e. for which no associated rule exists in the firewall's data store. In one embodiment, the firewall may detect some unknown extensions, fields or code that part of the one or more data packets and, in response, determine that the one or more data packets are unrecognised. The one or more data packets may comprise parts which are recognised, i.e. for which a rule exists in the firewall's data store. In this case, the firewall may apply the rule to the recognised parts of the one or more data packets, e.g. by allowing the recognised parts of the one or more data packets to be forwarded to the further communication nodes in the communication system if the rule indicates that this action should be taken for the recognised parts of the one or more data packets. The firewall may then forward the unrecognised parts of the one or more data packets to the test system. The firewall 504 may be configured to transmit at least part of the one or more data packets to the test system when at least part of the one or more data packets comprises unrecognised software. The test system may be located at an external service provider, at an operator, or be part of the core network. The firewall may forward the at least part of the one or more data packets to the test system via an Application programming interface.

In some embodiments, the test system may include information about the at least part of one or more data packets. This information may include rules indicating one or more actions which the firewall should take upon receiving one or more data packets comprising unrecognised software or of an unrecognised message format or communications protocol. This information may comprise an indication of a threat level presented by the one or more data packets. If this information is available in the test system, the test system may, in response to receiving the least part of the one or more data packets from the firewall, send to the firewall this information. The firewall may then take appropriate action, for example, blocking at least part of the one or more data packets, allowing the at least one or more data packets access to the communication system, updating its list of polices or rules regarding actions to be taken in response to receiving data packets of a recognised type.

If this information for the at least part of the one or more data packets is not available in the test system, the test system may then introduce the at least part of the one or more data packets to a virtualised environment comprising one or more virtualised nodes of a communication system to determine a threat level for the at least part of the one or more data packets as described in this application.

When one or more data packets containing unrecognised elements are received at the firewall 504, the firewall 504 may perform one of the following actions: the one or more data packets are placed in quarantine, the one or more data packets are discarded, or the unrecognised parts of the one or more data packets are removed from the one or more data packets whilst the remaining parts of the one or more data packets are forwarded on to their destination indicated in their headers.

The one or more data packets received by the firewall 504 may comprise one or more signalling messages. The one or more data packets may comprise an extension to a communication protocol used by the communication nodes. The communication protocol may be a signalling protocol. These extensions are typically sent by network operators and may be referred to as proprietary extensions. Attackers may design malware which is disguised as an extension from a network operator. The firewall must develop an appropriate set of rules to allow it prevent such malware from having access to communication nodes of the system.

The test system 506 is configured to receive the at least part of one or more data packets, and cause one or more tests to be carried out using the at least part of one or more data packets. The test system may be part of a communication node in the communication system. Alternatively, the test system may be separate from the communication nodes of the communication system and could be located remotely from the communication system. The test system makes use of a virtualised environment 508 for testing the at least part of the one or more data packets. The virtualised environment may be a virtualisation of a communication system and include a virtualisation of a core network including virtualised network nodes. The virtualised network nodes may include one or more of: a visitor location register (VLR), which is a database that that contains information about the subscribers roaming within a MME location area; a Serving GPRS Support node (SGSN), which serves the UE by delivery of data packets from and to the mobile stations within its geographical service area, keeping track of the location of an individual UE and performing security functions and access control; a Gateway GPRS Support Node (GGSN), which is responsible for the internetworking between a GPRS (general packet radio service) network and external packet switched networks, like the Internet and X.25 networks; and a packet data network (PDN) gateway, which transports IP data traffic between the UE and the external networks. The virtualized environment may imitate the real network environment of that operator to a large degree. Therefore the nodes that are virtualized can vary in release and protocol.

The virtualised environment 508 may be part of the test system 506 or may run on a separate entity. The virtualised environment may provide a simulation which allows the software to run on the virtualised computer nodes and produce test results, which can be analysed to determine a threat level. The software may be an extension or update to a communication protocol, which is used by the communication system. The virutalised environment may simulate the effects that would take place if the software were installed on one or more communication nodes. The virtualised environment may be a sandbox.

The behaviour of the unrecognised at least part of one or more data packets when running in the virtualised environment is analysed. For example, memory consumption may be measured, the frequency of processor requests may be measured, and the frequency of database request may be measured. Based on one or more of these determined parameters the threat level may be determined. The determined threat level may then be communicated back to the firewall.

In some cases, particular types of malware, such as ransomware, may remain dormant on a system for significant periods of time, e.g. 6 months, before becoming active. For example, the ransomware may spoil all backups and then become active. Therefore, malicious ransomware could be installed on a communication node without being noticed. Checking the memory of a communication node over a long period of time in order to identify ransomware is quite demanding. Therefore it would be desirable to identify the ransomware quickly even if it is designed to remain dormant and to not activate for a long period of time.

The virtualised environment 508 may solve this problem by using an accelerated clock. By increasing the speed at which the clock of the virtualised environment progresses in time, ransomware or other types of malware which are designed not to activate for a long period time may be caused to activate. Hence, such malware can be detected by the test system. The clock acceleration may comprise adjusting the clock to a new future time. The clock acceleration may comprise speeding up the clock, e.g. by adding additional ticks to the environment clock source.

In some cases, multiple instances of the virtualised environment may be running simultaneously. This may be particularly helpful when an accelerated clock is used so that the at least part of one or more data packets to be tested are not provided to a virtualised environment where the clock has already been accelerated.

Different parameters of the virtualised environment may be determined when the at least part of the one or more data packets is provided to the environment. For example, the test system may measure memory utilisation at one of the virutalised communication nodes, e.g. the HSS. These determined parameters may form a set of test results, which can be used to determine a threat level of the at least part of the one or more data packets. The test system 506 may transmit the determined threat level and/or parameters to the firewall 504, which may be controlled by this information. For example, the firewall may be updated in dependence upon this information. For example, the firewall may determine an update to one or more of its rules. For example, the firewall may determine, in response to a low or non-existent threat level posed by at least part of the one or more data packets, to update its rules to allow further data packets of the same communications protocol, message format, extension or data packets that include the same type of software. The firewall may additionally or alternatively, allow further data transmissions from the same sender on the interconnection network that sent that one or more data packets. In response to a higher threat level, the firewall may determine to block further data packets of the same communications protocol, message format, extension or data packets that include the same type of software. Additionally or alternatively, the firewall may block all transmissions from the sender of the at least part of the one or more data packets which was identified as being a threat.

In some embodiments, if the threat level is determined to be below a threshold, and after a predefined period of time has elapsed, an indication may be sent to the firewall that the particular at least part of the one or more data packets are to be allowed through the firewall. The analysis system may compare the unknown at least part of the one or more data packets with a protocol specification to determine if there is a potential match. If so, the test system may send an indication to the test system that at least part of the one or more data packets matching the protocol specification is to be allowed.

In some embodiments, the test system may analyse the test results and determine an action to perform itself. Such an action may be updating one or more of its rules. The test system is then configured to transmit an instruction to the firewall 504 to implement these rule updates.

Also shown in Figure 5 is a telecommunications operator 510. The test system may send information resulting from the analysis of providing the at least part of the one or more data packets to the virtualised environment to the operator. For example, the test system may transmit to the operator, test results, e.g. memory consumption, an indicated threat level, or rule updates for a firewall. The operator 510 may use this information to determine control information for a firewall that could be applied. In some cases, the firewall 504 may receive control information, e.g. recommended rule updates, from the operator, which the operator may have derived from the information provided to it by the test system 506.

As noted above, another core network may transmit messages in accordance with an upgraded protocol/message format to the communications system 500, even if the communication system hasn't been updated to use the upgraded protocol/message format. However, the communication protocols may be backwards compatible, such that the nodes of the communication system may receive and process messages in accordance with the updated protocol/format. By redirecting messages received in accordance with the updated protocol/format to the test system, these messages may be checked to determine that they do not include any malicious software and then allowed access to the system. This is advantageous, as an operator that upgrades their core network and then supports new features (e.g. with new AVPs) would send those messages with those features to their partners (since operators will typically not have partner specific configuration). If the messages would just be dropped by the firewall if there are new unknown features in there, then this would mean that the roaming link between the operator and the communication system of the partner would be effectively dead due to the firewall.

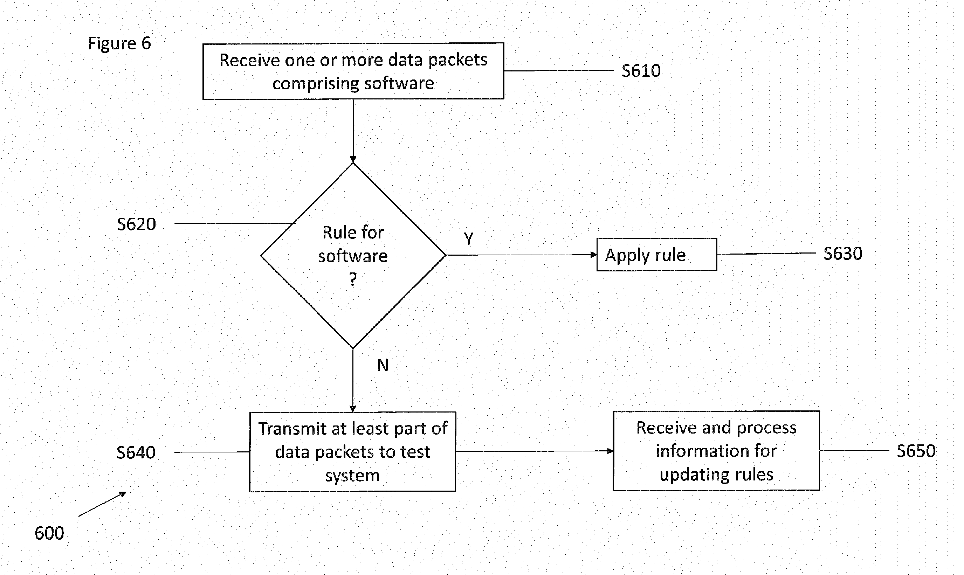

Reference is made to Figure 6, which illustrates a method 600 that may be performed at a network node of a communication system. The method may be performed partly or in whole by a firewall 504. It would be appreciated by the person skilled in the art that the method shown in Figure 6 is an example only and that some embodiments may include only some of the steps shown in the method and may include other steps.

At S610, one or more data packets, that may comprise software, are received by a node from over an interconnection network. At S620, the node searches a datastore for a rule of its set of rules, which applies to the one or more data packets. The data store may be part of the node or another part of the communication system. The node may perform this search by analysing the protocol or message format of the one or more data packets, and determining whether or not a rule exists in the data store for this particular protocol or message format. Alternatively or additionally, the node may perform this search by analysing the data or header content of the one or more data packets, and determining whether or not a rule exists in the data store for this particular data or header content. If the node identified a rule stored in the data store for the one or more data packets, the method proceeds to S630, where the node applies that rule to the one or more data packets. Applying the rule to the one or more data packets may comprise blocking the one or more data packets, blocking part of the one or more data packets and allowing the remaining part of the one or more data packets through the node, or allowing the one or more data packets through the node.

If the node did not identify a rule stored in the data store for at least part of the one or more data packets, the method proceeds to S640, wherein the at least part of the one or more data packets is transmitted to the test system.

In some embodiments, a rule may be identified for a part of the one or more data packets, whilst no rule is identified for the remaining part of the one or more data packets. In this case, the node may perform an action, such as allowing through the node the part of the one or more data packets, for which a rule and corresponding action is identified. The remaining part of the one or more data packets is transmitted to the test system.

After 5640, the method proceeds to S650, where the information for controlling the node, is received. This may be received from the test system or from another entity. The information may comprise one or more rule updates and one or more associated actions. A rule update for the at least part of the one or more data packets may be received so that the node will perform an action associated with the rule upon receiving one or more data packets according to the communications protocol or message format in the future. The information may comprise test results from running the software in a virtualised environment. The information may comprise an indication of threat level presented by the software. Upon receiving the information, the node is configured to use the information to update the data store with the determined rule update. The rule update may provide a new rule in the data store, the rule being associated with the software of the at least one or more data packets. Therefore, upon receiving further software that also matches this rule at the node, an action associated with the rule may be performed.

Additionally or alternatively, the node may receive the information for controlling the node and, in response to the information, perform an action with regard to the at least part of the one or more data packets.

In some embodiments, at S640, the decision as to whether to transmit the at least part of the one or more data packets through the node may be deferred until the necessary information has been received from the test system. In other words, the transmission of the at least part of the one or more data packets through the node may be put on hold until the information has been received from the test system. In this case, at S650, in addition to updating the one or more rules, the at least part of the one or more data packets that have been placed on hold may be transmitted past the node. This may occur in dependence upon an indication of threat level - e.g. if the threat level is low or non-existent.

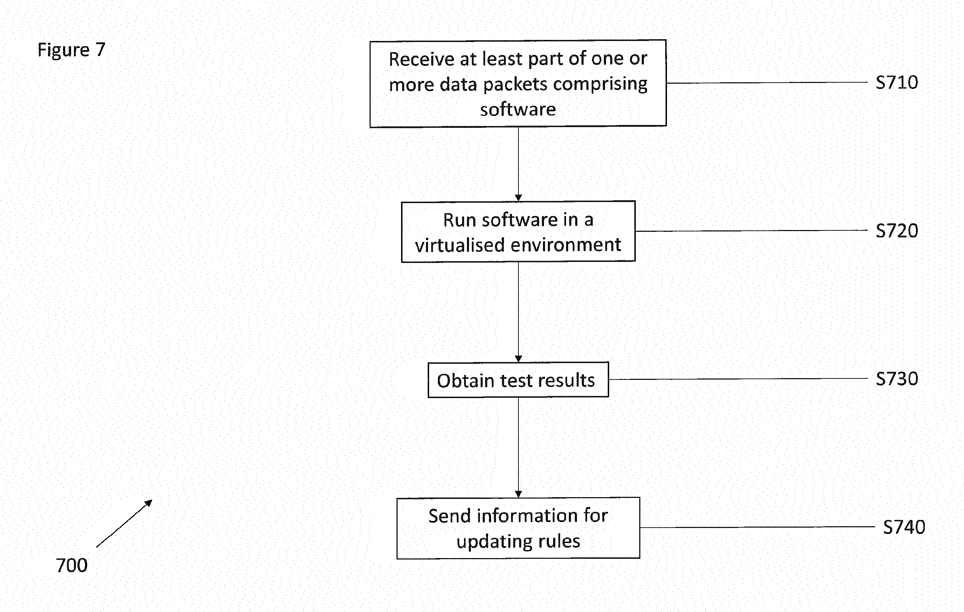

Reference is made to Figure 7, which shows a method that may be performed at a test system. The test system may be the test system 506. It would be appreciated by the person skilled in the art that the method shown in Figure 7 is an example only and that some embodiments may include only some of the steps shown in the method.

At S710, at least part of one or more data packets are received from a network node. The one or more data packets having been received from an interconnection network. The at least part of one or more data packets may comprise software. The network node may incorporate a firewall 504.

At S720, the at least part of the one or more data packets is provided to the virtualised environment. The virtualised environment may be a sandbox. The virtualised environment comprises one or more virtualised communication nodes, which may correspond to communication nodes of the real communication system 500. The virtualised environment may run on the test system or on another data processing system. The one or more virtualised communication nodes may be virtual machines that run on a data processing system, e.g. the test system.

At S730, the test system determines test results, e.g. memory consumption, from the simulation in the virtualised environment. The test system may determine a threat level from the test results. Additionally, the test system may then determine control information, e.g. a rule update to send to the node, which may form part of the information sent in S740.

At S740, the test system sends information facilitating control of the node. This may involve sending information, such as test results, to another entity on the network which will determine an action to be performed by the node, e.g. an update to be made to the node's rules. Alternatively, it may involves sending control information, such as rule update, to the node.

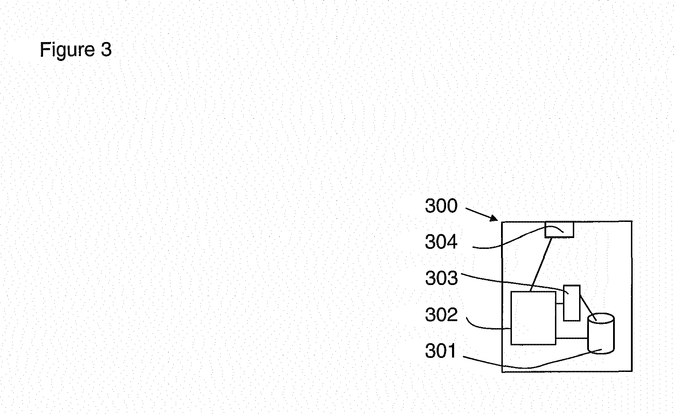

Figure 3 shows an example of a control apparatus for a communication system, for example to be coupled to and/or for controlling a node incorporated into a communication system or a test system, e.g. a malware test system. The control apparatus may be integrated with or external to a node or module of a core network. In some embodiments, such a node or module may comprise a separate control apparatus unit or module for controlling a node or test system. In other embodiments, the control apparatus can be another network element. The control apparatus 300 can be arranged to provide control of the operations of a node of the system. The control apparatus 300 comprises at least one memory 301, at least one data processing unit 302, 303 and an input/output interface 304. The at least one memory may be configured as a data store for storing a set of rules for filtering data packets received at a node. The rules may be used to determine whether an incoming data should be allowed access to the core network and/or transmitted past the node. Via the interface 304 the control apparatus can be coupled to one or more nodes of the system. The interface 304 may alternatively or additionally be used to send and receive communications with a test system, which may be used to update the set of rules held in the memory as described. The at least one data processing unit 302, 303 of the control apparatus 300 can be configured to execute an appropriate software code to provide the control functions. The control functions may comprise: receiving from a node of a communication system, at least part of one or more data packets received at the node from an interconnection network; causing the providing of the at least part of one or more data packets to a virtualised environment comprising one or more virtualised nodes of a communication system to determine a threat level associated with the at least part of one or more data packets; and based on the determined threat level, causing the transmission of information for controlling the node.

In some embodiments, the control apparatus 300 may be used to control the function of a test system. In this case, the interface 304 may receive data packets for testing using a virtualised environment from a node. Additionally or alternatively, the interface 304 may be used to send and receive control signals for introducing one or more data packets to a virtualised environment. Additionally or alternatively, the interface 304 may be used to provide information for updating a node to the node based on a determined threat level. The at least one data processing unit 302, 303 of the control apparatus 300 can be configured to execute an appropriate software code to provide the control functions. The control functions may comprise: receiving at a node of a communication system, one or more data packets from an interconnection network; causing the transmission of at least part of said one or more data packets to a test system configured to provide the at least part of one or more data packets to a virtualised environment comprising one or more virtualised nodes of a communication system to determine a threat level associated with the at least part of one or more data packets; receiving information based on the determined threat level; and using said information to control the node.Although most of the examples presented have been in the context of wireless communication systems, in particular LTE, it would be appreciated by the skilled person that some embodiments may relate to communication systems which operate according to different protocols and which use wires (e.g. metal wires or fibre optic cables) for communication between user devices and nodes of the communication system.

In general, the various embodiments may be implemented in hardware or special purpose circuits, software, logic or any combination thereof. Some aspects of the invention may be implemented in hardware, while other aspects may be implemented in firmware or software which may be executed by a controller, microprocessor or other computing device, although the invention is not limited thereto. While various aspects of the invention may be illustrated and described as block diagrams, flow charts, or using some other pictorial representation, it is well understood that these blocks, apparatus, systems, techniques or methods described herein may be implemented in, as non-limiting examples, hardware, software, firmware, special purpose circuits or logic, general purpose hardware or controller or other computing devices, or some combination thereof.

The embodiments of this invention may be implemented by computer software executable by a data processor of the mobile device, such as in the processor entity, or by hardware, or by a combination of software and hardware. Computer software or program, also called program product, including software routines, applets and/or macros, may be stored in any apparatus-readable data storage medium and they comprise program instructions to perform particular tasks. A computer program product may comprise one or more computer-executable components which, when the program is run, are configured to carry out embodiments. The one or more computer-executable components may be at least one software code or portions of it.

Further in this regard it should be noted that any blocks of the logic flow as in the Figures may represent program steps, or interconnected logic circuits, blocks and functions, or a combination of program steps and logic circuits, blocks and functions. The software may be stored on such physical media as memory chips, or memory blocks implemented within the processor, magnetic media such as hard disk or floppy disks, and optical media such as for example DVD and the data variants thereof, CD. The physical media is a non-transitory media.

The memory may be of any type suitable to the local technical environment and may be implemented using any suitable data storage technology, such as semiconductor based memory devices, magnetic memory devices and systems, optical memory devices and systems, fixed memory and removable memory. The data processors may be of any type suitable to the local technical environment, and may comprise one or more of general purpose computers, special purpose computers, microprocessors, digital signal processors (DSPs), application specific integrated circuits (ASIC), FPGA, gate level circuits and processors based on multi core processor architecture, as non-limiting examples.

Embodiments of the inventions may be practiced in various components such as integrated circuit modules. The design of integrated circuits is by and large a highly automated process. Complex and powerful software tools are available for converting a logic level design into a semiconductor circuit design ready to be etched and formed on a semiconductor substrate.

The foregoing description has provided by way of non-limiting examples a full and informative description of the exemplary embodiment of this invention. However, various modifications and adaptations may become apparent to those skilled in the relevant arts in view of the foregoing description, when read in conjunction with the accompanying drawings and the appended claims. However, all such and similar modifications of the teachings of this invention will still fall within the scope of this invention as defined in the appended claims. Indeed there is a further embodiment comprising a combination of one or more embodiments with any of the other embodiments previously discussed.

## Claims

1. A method comprising:
receiving (S610) at a node (502) of a communication system, one or more data packets comprising software from an interconnection network;
searching (S620), by the node (502) in a data store for a rule of its set of rules which applies to the one or more data packets,
wherein applying a rule to the one or more data packets comprises blocking the one or more data packets, blocking part of the one or more data packets and allowing the remaining part of the one or more data packets through the node (502), or allowing the one or more data packets through the node (502);
if a rule is identified in the data store for the one or more data packets, applying (S630), by the node (502), that rule to the one or more data packets;
if no rule is identified in the data store for at least part of the one or more data packets, transmitting (S640), by the node (502), the at least part of one or more data packets to a test system (506);
receiving (S710), at the test system (506), the at least part of the one or more data packets;
providing (720), by the test system (506), the at least part of the one or more data packets to a virtualised environment that is a virtualisation of the communication system comprising a virtualisation of a core network comprising one or more virtualised network nodes of the communication system,
determine (730), by the test system (506), a threat level associated with the at least part of the one or more data packets from test results obtained by running the software of the at least part of the one or more data packets in the virtualised environment;
transmitting (740), by the test system (506), information of the threat level associated with the at least part of the one or more data packets to the node (502); and
updating (S650), by the node (502), rules for the at least part of the one or more data packets in the data store based on the threat level.

2. A method as claimed in claim 1, wherein the node (502) comprises a firewall (504), wherein the firewall (504) is configured to perform the steps of:
receiving (S610) at the node (502);
searching (S620) in the data store;
if a rule is identified in the data store for the one or more data packets, applying (S630) that rule to the one or more data packets;
if no rule is identified in the data store for at least part of the one or more data packets, transmitting (S640), the at least part of one or more data packets to the test system (506); and
updating (S650) the rules.

3. A method as claimed in a claim 1 or claim 2, comprising running the software in the virtualised environment (508) using an accelerated clock.

4. A method as claimed in any preceding claim, wherein the virtualised environment (508) comprises a sandbox.

5. A method as claimed in any preceding claim, wherein the one or more data packets are configured according to the diameter protocol; wherein the node (502) of the communication system is configured to communicate using a SS7 protocol.

6. A method comprising as claimed in any preceding claim, wherein the at least part of said one or more data packets comprises elements unrecognised to the node (502).

7. A method as claimed in claim 6, further comprising:
determining that the at least part of said one or more data packets are unrecognised to the node (502) upon no rule of the sets of rules being identified for the software.

8. A method as claimed in claim 7, the method further comprising;
extracting the at least part of said one or more data packets from the one or more data packets; and
performing an action with respect to a remaining part of the one or more data packets in response to determining a match of said remaining part to at least one rule of said set of rules.

9. A computer program product for a computer comprising software code portions for performing the steps of any of the claims 1 to 8, when the program is run on the computer.

10. An apparatus comprising:
a node (502) comprising at least one processor and at least one memory including computer program code, the at least one memory and the computer program code configured to, with the at least one processor, cause the node (502) at least to:
receive (S610) one or more data packets comprising software from an interconnection network;
search (S620) in a data store for a rule of its set of rules which applies to the one or more data packets,
if a rule is identified in the data store for the one or more data packets, apply (S630) that rule to the one or more data packets;
if no rule is identified in the data store for at least part of the one or more data packets, transmit (S640) the at least part of one or more data packets to a test system (506);
wherein applying a rule to the one or more data packets comprises blocking the one or more data packets, blocking part of the one or more data packets and allowing the remaining part of the one or more data packets through the node (502), or allowing the one or more data packets through the node (502),
wherein the apparatus further comprises the test system (506) comprising at least one processor and at least one memory including computer program code, the at least one memory and the computer program code configured to, with the at least one processor, cause the test system (506) at least to:
receive (S710) the at least part of the one or more data packets;
provide (S720) the at least part of the one or more data packets to a virtualised environment that is a virtualisation of the communication system comprising a virtualisation of a core network comprising one or more virtualised network nodes of the communication system,
determine (S730) a threat level associated with the at least part of the one or more data packets from test results obtained by running the software of the at least part of the one or more data packets in the virtualised environment;
transmit (S740) information of the threat level associated with the at least part of the one or more data packets to the node (502),
wherein the the at least one memory of the node (502) and the computer program code of the node (502) are configured to, with the at least one processor of the node (502), cause the node (502) at least to: update (S650) rules for the at least part of the one or more data packets in the data store based on the threat level.

## Patentansprüche

1. Ein Verfahren umfassend:
Empfangen (S610), über einen Knoten (502) eines Kommunikationssystems, eines oder mehrerer Datenpakete mit einer Software aus einem Verbindungsnetzwerk;
Suchen (S620), über den Knoten (502), in einem Datenspeicher nach einer Regel aus einer Reihe von Regeln, die auf das eine oder mehrere Datenpakete anwendbar ist,
wobei das Anwenden einer Regel auf ein oder mehrere Datenpakete das Blockieren eines oder mehrerer Datenpakete, das Blockieren eines Teils eines oder mehrerer Datenpakete und das Genehmigen des restlichen Teils eines oder mehrerer Datenpakete über den Knoten (502) oder das Genehmigen eines oder mehrerer Datenpakete über den Knoten (502) umfasst;
Anwenden (S630), wenn eine Regel im Datenspeicher für eines oder mehrere Datenpakete erfasst wird, über den Knoten (502) dieser Regel auf ein oder mehrere Datenpakete;
Übertragen (S640), wenn keine Regel im Datenspeicher für mindestens einen Teil eines oder mehrerer Datenpakete erfasst wird, über den Knoten (502) des mindestens einen Teils eines oder mehrerer Datenpakete an ein Testsystem (506);
Empfangen (S710), im Testsystem (506), des mindestens einen Teils eines oder mehrerer Datenpakete;
Bereitstellen (720), vom Testsystem (506) des mindestens einen Teils eines oder mehrerer Datenpakete an eine virtualisierte Umgebung, die eine Virtualisierung des Kommunikationssystems ist, das eine Virtualisierung eines Kernnetzwerks mit einem oder mehreren virtualisierten Netzwerkknoten des Kommunikationssystems umfasst,
Ermitteln (730), über das Testsystem (506), einer Bedrohungsstufe, assoziiert mit dem mindestens einen Teil eines oder mehrerer Datenpakete aus den Testergebnissen, die durch das Ausführen der Software des mindestens einen Teils eines oder mehrerer Datenpakete in der virtualisierten Umgebung erhalten werden;
Übertragen (740), über das Testsystem (506), von Informationen der Bedrohungsstufe, die mit dem mindestens einen Teil eines oder mehrerer Datenpakete an den Knoten (502) assoziiert ist; und
Aktualisieren (S650), über den Knoten (502), der Regeln für den mindestens einen Teil eines oder mehrerer Datenpakete im Datenspeicher basierend auf der Bedrohungsstufe.

2. Verfahren nach Anspruch 1, wobei der Knoten (502) eine Firewall (504) umfasst, wobei die Firewall (504) so konfiguriert ist, dass folgende Schritte ausgeführt werden:
Empfangen (S610) am Knoten (502);
Suchen (S620) im Datenspeicher;
Anwenden (S630), wenn eine Regel im Datenspeicher für eines oder mehrere Datenpakete erfasst wird, dieser Regel auf ein oder mehrere Datenpakete;
Übertragen (S640), wenn keine Regel im Datenspeicher für mindestens einen Teil eines oder mehrerer Datenpakete erfasst wird, des mindestens einen Teils eines oder mehrerer Datenpakete an das Testsystem (506); und
Aktualisieren (S650) der Regeln.

3. Verfahren nach Anspruch 1 oder 2, das das Ausführen der Software in der virtualisierten Umgebung (508) unter Einsatz einer beschleunigten Uhr umfasst.

4. Verfahren nach einem der vorstehenden Ansprüche, wobei die virtualisierte Umgebung (508) eine Sandbox umfasst.

5. Verfahren nach einem der vorstehenden Ansprüche, wobei ein oder mehrere Datenpakete gemäß dem Diameter Protokoll konfiguriert sind; wobei der Knoten (502) des Kommunikationssystems so konfiguriert ist, dass die Kommunikation über ein SS7 Protokoll erfolgt.

6. Verfahren nach einem der vorstehenden Ansprüche, wobei das mindestens einen Teil eines oder mehrerer Datenpakete Elemente umfassen, die vom Knoten (502) nicht erkannt werden.

7. Verfahren nach Anspruch 6, das ferner umfasst:
Ermitteln, dass das mindestens einen Teil eines oder mehrerer Datenpakete vom Knoten (502) nicht erkannt werden, an dem keine Regel aus der Reihe von Regeln für die Software erfasst wurde.

8. Verfahren nach Anspruch 7, wobei das Verfahren ferner umfasst:
Extrahieren des mindestens einen Teils eines oder mehrerer Datenpakete aus einem oder mehreren Datenpaketen; und
Ausführen einer Aktion in Bezug auf einen restlichen Teil eines oder mehrerer Datenpakete als Reaktion auf das Ermitteln einer Übereinstimmung des restlichen Teils mit mindestens einer Regel aus der Reihe von Regeln.

9. Ein Computerprogrammprodukt für einen Computer mit Softwarecode-Abschnitten zum Ausführen der Schritte eines der Ansprüche 1 bis 8, wenn das Programm auf dem Computer ausgeführt wird.

10. Eine Vorrichtung umfassend:
einem Knoten (502), der mindestens einen Prozessor und mindestens einen Speicher mit Computerprogrammcode umfasst, wobei der mindestens eine Speicher und der Computerprogrammcode mit dem mindestens einen Prozessor so konfiguriert sind, dass der Knoten (502) mindestens Folgendes aufweist:
Empfangen (S610) eines oder mehrerer Datenpakete mit einer Software aus einem Verbindungsnetzwerk;
Suchen (S620) in einem Datenspeicher nach einer Regel aus einer Reihe von Regeln, die auf das eine oder mehrere Datenpakete anwendbar ist,
Anwenden (S630), wenn eine Regel im Datenspeicher für eines oder mehrere Datenpakete erfasst wird, dieser Regel auf ein oder mehrere Datenpakete;
Übertragen (S640), wenn keine Regel im Datenspeicher für mindestens einen Teil eines oder mehrerer Datenpakete erfasst wird, des mindestens einen Teils eines oder mehrerer Datenpakete an ein Testsystem (506);
wobei das Anwenden einer Regel auf ein oder mehrere Datenpakete das Blockieren eines oder mehrerer Datenpakete, das Blockieren eines Teils eines oder mehrerer Datenpakete und das Genehmigen des restlichen Teils eines oder mehrerer Datenpakete über den Knoten (502) oder das Genehmigen eines oder mehrerer Datenpakete über den Knoten (502) umfasst,
wobei die Vorrichtung ferner das Testsystem (506) mit mindestens einem Prozessor und mindestens einem Speicher mit dem Computerprogrammcode umfasst, wobei der mindestens eine Speicher und der Computerprogrammcode mit dem mindestens einen Prozessor so konfiguriert sind, dass das Testsystem (506) mindestens Folgendes aufweist:
Empfangen (S710) des mindestens einen Teils eines oder mehrerer Datenpakete;
Bereitstellen (S720) des mindestens einen Teils eines oder mehrerer Datenpakete an eine virtualisierte Umgebung, die eine Virtualisierung des Kommunikationssystems ist, das eine Virtualisierung eines Kernnetzwerks mit einem oder mehreren virtualisierten Netzwerkknoten des Kommunikationssystems umfasst,
Ermitteln (S730) einer Bedrohungsstufe, assoziiert mit dem mindestens einen Teil eines oder mehrerer Datenpakete aus den Testergebnissen, die durch das Ausführen der Software des mindestens einen Teils eines oder mehrerer Datenpakete in der virtualisierten Umgebung erhalten werden;
Übertragen (S740) von Informationen der Bedrohungsstufe, die mit dem mindestens einen Teil eines oder mehrerer Datenpakete an den Knoten (502) assoziiert ist,
wobei der mindestens eine Speicher des Knotens (502) und der Computerprogrammcode des Knotens (502) mit dem mindestens einen Prozessor des Knotens (502) so konfiguriert sind, dass der Knoten (502) mindestens Folgendes aufweist:
Aktualisieren (S650) der Regeln für den mindestens einen Teil eines oder mehrerer Datenpakete im Datenspeicher basierend auf der Bedrohungsstufe.

## Revendications

1. Procédé comprenant :
la réception (S610) au niveau d'un nœud (502) d'un système de communication, d'un ou plusieurs paquets de données comprenant un logiciel en provenance d'un réseau d'interconnexion ;
la recherche (S620), par le nœud (502) dans une mémoire de données d'une règle de son ensemble de règles qui s'applique aux un ou plusieurs paquets de données,
dans lequel l'application d'une règle aux un ou plusieurs paquets de données comprend le blocage des un ou plusieurs paquets de données, le blocage d'une partie des un ou plusieurs paquets de données et l'autorisation de la partie restante des un ou plusieurs paquets de données par l'intermédiaire du nœud (502), ou l'autorisation des un ou plusieurs paquets de données par l'intermédiaire du nœud (502) ;
si une règle est identifiée dans la mémoire de données pour les un ou plusieurs paquets de données, l'application (S630), par le nœud (502), de cette règle aux un ou plusieurs paquets de données ;
si aucune règle n'est identifiée dans la mémoire de données pour au moins une partie des un ou plusieurs paquets de données, la transmission (S640), par le nœud (502), de la au moins une partie des un ou plusieurs paquets de données à un système de test (506) ;
la réception (S710), au niveau du système de test (506), de la au moins une partie des un ou plusieurs paquets de données ;
la fourniture (720), par le système de test (506), de la au moins une partie des un ou plusieurs paquets de données à un environnement virtualisé qui est une virtualisation du système de communication comprenant une virtualisation d'un réseau cœur comprenant un ou plusieurs nœuds de réseau virtualisés du système de communication,
la détermination (730), par le système de test (506), d'un niveau de menace associé à la au moins une partie des un ou plusieurs paquets de données à partir de résultats de test obtenus en exécutant le logiciel de la au moins une partie des un ou plusieurs paquets de données dans l'environnement virtualisé ;
la transmission (740), par le système de test (506), d'informations du niveau de menace associé à la au moins une partie des un ou plusieurs paquets de données au nœud (502) ; et
la mise à jour (S650), par le nœud (502), de règles pour la au moins une partie des un ou plusieurs paquets de données dans la mémoire de données sur la base du niveau de menace.

2. Procédé selon la revendication 1, dans lequel le nœud (502) comprend un pare-feu (504), dans lequel le pare-feu (504) est configuré pour réaliser les étapes de :
réception (S610) au niveau du nœud (502) ;
recherche (S620) dans la mémoire de données ;
si une règle est identifiée dans la mémoire de données pour les un ou plusieurs paquets de données, application (S630) de cette règle aux un ou plusieurs paquets de données ;
si aucune règle n'est identifiée dans la mémoire de données pour au moins une partie des un ou plusieurs paquets de données, transmission (S640) de la au moins une partie des un ou plusieurs paquets de données au système de test (506) ; et
mise à jour (S650) des règles.

3. Procédé selon la revendication 1 ou la revendication 2, comprenant l'exécution du logiciel dans l'environnement virtualisé (508) en utilisant une horloge accélérée.

4. Procédé selon une quelconque revendication précédente, dans lequel l'environnement virtualisé (508) comprend un bac à sable.

5. Procédé selon une quelconque revendication précédente, dans lequel les un ou plusieurs paquets de données sont configurés selon le protocole diameter ; dans lequel le nœud (502) du système de communication est configuré pour communiquer en utilisant un protocole SS7.

6. Procédé selon une quelconque revendication précédente, dans lequel la au moins une partie desdits un ou plusieurs paquets de données comprend des éléments non reconnus par le nœud (502).

7. Procédé selon la revendication 6, comprenant en outre :
la détermination que la au moins une partie desdits un ou plusieurs paquets de données est non reconnue par le nœud (502) lorsqu'aucune règle des ensembles de règles n'est identifiée pour le logiciel.

8. Procédé selon la revendication 7, le procédé comprenant en outre :
l'extraction de la au moins une partie desdits un ou plusieurs paquets de données des un ou plusieurs paquets de données ; et
la réalisation d'une action relativement à une partie restante des un ou plusieurs paquets de données en réponse à la détermination d'une correspondance de ladite partie restante avec au moins une règle dudit ensemble de règles.

9. Produit de programme informatique pour un ordinateur comprenant des parties de code logiciel pour réaliser les étapes de l'une quelconque des revendications 1 à 8, lorsque le programme est exécuté sur l'ordinateur.

10. Appareil comprenant :
un nœud (502) comprenant au moins un processeur et au moins une mémoire incluant un code de programme informatique, la au moins une mémoire et le code de programme informatique configurés pour, avec le au moins un processeur, amener le nœud (502) à au moins :
recevoir (S610) un ou plusieurs paquets de données comprenant un logiciel en provenance d'un réseau d'interconnexion ;
rechercher (S620) dans une mémoire de données une règle de son ensemble de règles qui s'applique aux un ou plusieurs paquets de données,
si une règle est identifiée dans la mémoire de données pour les un ou plusieurs paquets de données, appliquer (S630) cette règle aux un ou plusieurs paquets de données ;
si aucune règle n'est identifiée dans la mémoire de données pour au moins une partie des un ou plusieurs paquets de données, transmettre (S640) la au moins une partie des un ou plusieurs paquets de données à un système de test (506) ;
dans lequel l'application d'une règle aux un ou plusieurs paquets de données comprend le blocage des un ou plusieurs paquets de données, le blocage d'une partie des un ou plusieurs paquets de données et l'autorisation de la partie restante des un ou plusieurs paquets de données par l'intermédiaire du nœud (502), ou l'autorisation des un ou plusieurs paquets de données par l'intermédiaire du nœud (502),
dans lequel l'appareil comprend en outre le système de test (506) comprenant au moins un processeur et au moins une mémoire incluant un code de programme informatique, la au moins une mémoire et le code de programme informatique configurés pour, avec le au moins un processeur, amener le système de test (506) à au moins :
recevoir (S710) la au moins une partie des un ou plusieurs paquets de données ;
fournir (S720) la au moins une partie des un ou plusieurs paquets de données à un environnement virtualisé qui est une virtualisation du système de communication comprenant une virtualisation d'un réseau cœur comprenant un ou plusieurs nœuds de réseau virtualisés du système de communication,
déterminer (S730) un niveau de menace associé à la au moins une partie des un ou plusieurs paquets de données à partir de résultats de test obtenus en exécutant le logiciel de la au moins une partie des un ou plusieurs paquets de données dans l'environnement virtualisé ;
transmettre (S740) des informations du niveau de menace associé à la au moins une partie des un ou plusieurs paquets de données au nœud (502),
dans lequel la au moins une mémoire du nœud (502) et le code de programme informatique du nœud (502) sont configurés pour, avec le au moins un processeur du nœud (502), amener le nœud (502) à au moins :
mettre à jour (S650) des règles pour la au moins une partie des un ou plusieurs paquets de données dans la mémoire de données sur la base du niveau de menace.
